# EUROPEAN PATENT APPLICATION

(11) **EP 2 866 295 A1**
(43) Date of publication of application: **29.04.2015**
(21) Application number: 14162632.5
(22) Date of filing: 31.03.2014
(51) Int. Cl.: H01M 10/48, H01M 2/10

(54) **Battery pack with temperature measuring device**

(30) Priority: 28.10.2013 KR 20130128643
(71) Applicant: Samsung SDI Co., Ltd., Yongin-si, Gyeonggi-do (KR)
(72) Inventor: Lee, Do-Hyung, Gyeonggi-do (KR)
(74) Representative: Mounteney, Simon James

(57) **Abstract**

Provided is a battery pack. The battery pack includes: battery cells that is disposed to form a plurality of rows, a holder that is disposed between neighboring rows among the plurality of rows of battery cells and has a first surface contacting a side surface of the battery cells forming a first row among the neighboring rows and a second surface contacting a side surface of the battery cells forming a second row among the neighboring rows; and a temperature device that is configured to measure a temperature of the battery cells. The holder includes a first receiving groove that is configured to receive the temperature device, and a cooling hole that is formed to pass through the holder such that a fluid enters and exits.

## Description

### BACKGROUND

### 1. Field

One or more embodiments of the present invention relate to battery packs.

### 2. Description of the Related Art

Secondary batteries are rechargeable unlike primary batteries that are not rechargeable. The secondary batteries are widely used not only in small high-tech electronic devices, such as mobile phones, personal digital assistants (PDAs), and notebook computers, but also in energy storage systems.

Since the secondary batteries are used for a long period of time through a charge/discharge operation, the stability of the secondary batteries is a matter of great interest. When heat generated during the charge/discharge operation of the secondary batteries, that is, the temperature of the secondary batteries are not properly managed, the secondary batteries are deteriorated and thus the life of the secondary batteries may not be guaranteed. Therefore, temperature control in the secondary batteries is a matter of importance.

### SUMMARY

One or more embodiments of the present invention include battery packs.

Additional aspects will be set forth in part in the description which follows and, in part, will be apparent from the description, or may be learned by practice of the presented embodiments.

According to one or more embodiments of the present invention, a battery pack includes: battery cells that is disposed to form a plurality of rows; a holder that is disposed between neighboring rows among the plurality of rows of battery cells and has a first surface contacting a side surface of the battery cells forming a first row among the neighboring rows and a second surface contacting a side surface of the battery cells forming a second row among the neighboring rows; and a temperature device that is configured to measure a temperature of the battery cells, wherein the holder includes a first receiving groove that is configured to receive the temperature device, and a cooling hole that is formed to pass through the holder such that a fluid enters and exits.

A depth of the first receiving groove may be smaller than or equal to a thickness of the temperature device.

The first receiving groove may be formed on at least one of the first surface and the second surface of the holder.

One edge portion of the temperature device may be connected to a wire that extends toward an outside, and the holder may further include a second receiving groove that is coupled to the first receiving groove and receives the wire.

The temperature device may contact a side surface of an inner battery cell among the battery cells forming the first row or the second row, and the inner battery cell is disposed at inner side of the first row or the second row.

The cooling hole may extend in a direction identical to a longitudinal direction of the battery cells.

The battery cells may be cylindrical.

The first surface and the second surface of the holder may include a recess corresponding to the side surface of the battery cells.

A pair of end holders may be disposed at an outermost portion of the battery cells, and the pair of end holders and the holder may be coupled by a coupling member that passes through the pair or end holders and the holder.

The holder may further include a stopper that contacts a top surface and a bottom surface of the battery cells.

The battery pack may further include a bus bar that electrically connects the battery cells and includes a hole formed at a position corresponding to the cooling hole.

The fluid may be air.

The holder may include: a first edge portion and a second edge portion that are disposed at both sides of the holder; and a partition portion that couples the first edge portion and the second edge portion and includes the first receiving groove and the cooling hole.

Each of the first and second edge portions may protrude along a direction from the partition portion toward the battery cells forming the first row and a direction from the partition portion toward the battery cells forming the second row.

Each of the first and second edge portions may protrude by a length of a radius of the battery cell.

The battery cells may be cylindrical, both side surfaces of the partition portion may include a recess corresponding to the side surface of the battery cells, and the partition portion may include a thick portion that is relatively thick and a thin portion that is relatively thin, which are formed by the recess.

The cooling hole may be formed at the thick portion.

At least some of the above and other features of the invention are set out in the claims.

### BRIEF DESCRIPTION OF THE DRAWINGS

These and/or other aspects will become apparent and more readily appreciated from the following description of embodiments of the invention, taken in conjunction with the accompanying drawings in which:
FIG. 1 is a schematic perspective view of a battery pack according to an embodiment of the present invention;
FIG. 2 is a detailed perspective view illustrating a holder and a temperature unit illustrated in FIG. 1;
FIG. 3 is a front view of the holder illustrated in FIG. 2;
FIG. 4 is a perspective view taken along line IV-IV in FIG. 2; and
FIG. 5 is a detailed perspective view illustrating end holders according to an embodiment of the present invention.

### DETAILED DESCRIPTION

Reference will now be made in detail to embodiments of the invention, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, expressions such as "at least one of," when preceding a list of elements, modify the entire list of elements and do not modify the individual elements of the list.

The present invention may include various embodiments and modifications, and exemplary embodiments thereof are illustrated in the drawings and will be described herein in detail. The effects and features of the present invention and the accomplishing method thereof will become apparent from the following description of the embodiments, taken in conjunction with the accompanying drawings. However, the prevent invention is not limited the embodiments described below, and may be embodied in various modes.

Hereinafter, the embodiments of the present invention will be described in detail with reference to the accompanying drawings. In the following description, like reference numerals denote like elements, and a redundant description thereof will be omitted.

It will be understood that although the terms "first", "second", etc. may be used herein to describe various components, these components should not be limited by these terms. These terms are only used to distinguish one component from another.

As used herein, the singular forms "a", "an" and "the" are intended to include the plural forms as well, unless the context clearly indicates otherwise.

It will be further understood that the terms "comprise", "include" and "have" used herein specify the presence of stated features or components, but do not preclude the presence or addition of one or more other features or components.

It will be understood that when a layer, region, or component is referred to as being "formed on," another layer, region, or component, it may be directly or indirectly formed on the other layer, region, or component. That is, for example, intervening layers, regions, or components may be present.

Sizes of elements in the drawings may be exaggerated for the convenience of description. In other words, since sizes and thicknesses of components in the drawings are arbitrarily illustrated for the convenience of description, the following embodiments are not limited thereto.

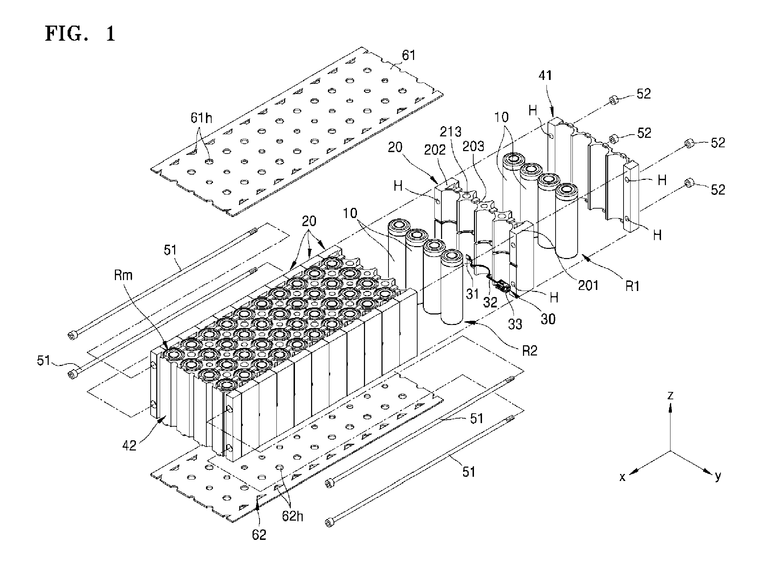

FIG. 1 is a schematic perspective view of a battery pack according to an embodiment of the present invention.

Referring to FIG. 1, the battery pack includes battery cells 10 forming a plurality of rows, a holder 20 interposed between neighboring rows of battery cells 10, a temperature unit 30 configured to obtain temperature information of the battery cell 10, a pair of end holders 41 and 42 disposed at an outermost portion of the battery cells 10, coupling members 51 and 52, and first and second bus bars 61 and 62 configured to electrically couple the battery cells 10.

The battery cells 10 are cylindrical but other shapes are possible. In this example, as illustrated in FIG. 1, the battery cells 10 have a cylindrical shape that extends in a third direction (z direction in FIG. 1) that is perpendicular to first and second directions.

The battery cells 10 are rechargeable battery cells. For example, the battery cells 10 may be nickel-cadmium (Ni-Cd) battery cells, nickel-hydrogen (Ni-H) battery cells, or lithium (Li) ion battery cells. Since a lithium ion battery cell has an operation voltage three times higher than the operation voltage of a nickel-cadmium battery cell or a nickel-hydrogen battery cell, which is widely used as a power supply for a portable electronic equipment, and has a high energy density per unit weight, the lithium ion battery cell may be used for various purposes.

The battery cells 10 are disposed to form a plurality of rows. In this example, four battery cells 10 may be arranged in the first direction (y direction in FIG. 1) to form a row of battery cells 10. When the battery cells 10 are disposed in this manner, the battery cells 10 may form a plurality of rows R1, R2, ..., Rm, and the rows R1, R2, ..., Rm may be disposed in parallel to each other in the second direction (x direction in FIG. 1) across the first direction.

Although the present embodiment illustrates a case where four battery cells 10 are disposed to form one row, embodiments of the present invention are not limited thereto. For example, two or more battery cells 10 may be disposed to form one row.

In this specification, for the convenience of description, it is assumed that a set of battery cells 10 forming one of rows of adjacent battery cells is a first row R1, and a set of battery cells 10 forming the other one of the rows is a second row R2.

The holder 20 is disposed between neighboring rows, for example, between the first row R1 and the second row R2. The holder 20 may directly contact the side surfaces of the battery cells 10 forming the first and second rows R1 and R2 while being disposed between the first row R1 and the second row R2. A first surface of the holder 20 may contact the side surfaces of the battery cells 10 forming the first row R1, and a second surface of the holder 20, which is opposite to the first surface, may contact the side surfaces of the battery cells 10 forming the second row R2.

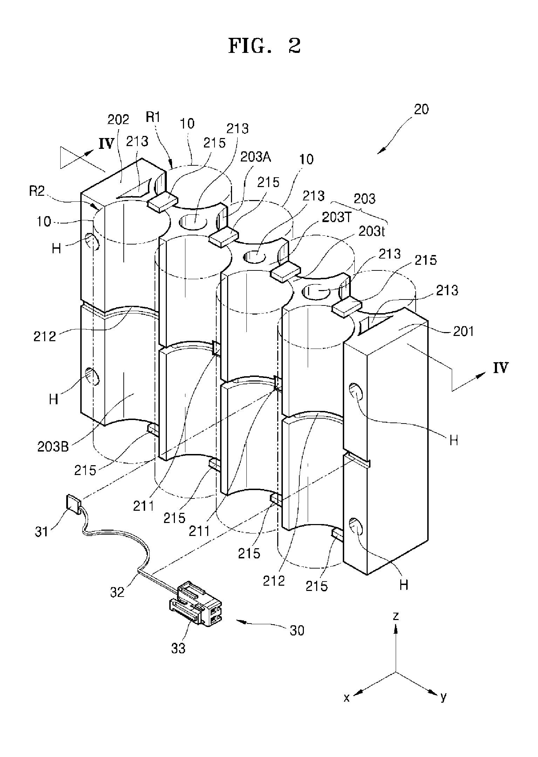

At least one of a first surface 203A (see FIG. 2) and a second surface 203B (see FIG. 2) of the holder 20 include a first receiving groove 211 (see FIG. 2) that is configured to receive a temperature device 31 (see FIG. 2). For example, the temperature device 31 is received in the first receiving groove 211 formed on the first surface of the holder 20. Since the holder 20 and the row (first row R1 or second row R2) of battery cells 10 contact each other while the temperature device 31 is received in the first receiving groove 211 of the holder 20, the temperature device 31 may obtain temperature information of the side surface of the battery cell 10.

Since a top surface and a bottom surface of the battery cell 10 are exposed to the outside, heat of the battery cell 10 may be easily dissipated by external air or be transmitted to a component such as a bus bar. Therefore, the temperature, which is measured while the temperature device 31 contacts the top surface of the battery cell 10, fails to fully reflect the temperature resulting from the heating of the battery cell 10.

However, according to this embodiment of the present invention, since the first receiving groove 211 configured to receive the temperature device 31 is provided on at least one of the first and second surfaces 203A and 203B contacting the side surface of the battery cell 10, the temperature device 31 may measure the temperature of the side surface of the battery cell 10. The temperature of the side surface of the battery cell 10 is less affected by other external components than the temperatures of the top surface and the bottom surface of the battery cell 10. Therefore, the temperature device 31 may be disposed to measure the temperature of the battery cell 10 relatively accurately.

The temperature unit 30 includes the temperature device 31 configured to measure the temperature of the battery cell 10, and a wire 32 and a connector 33 configured to transmit measured temperature information to the outside.

The temperature device 31 may be a thermistor. For example, thermistor may be a resistive thermistor that has an electrical resistance varying according to temperatures. The thermistor generates an electrical signal corresponding to the temperature of the battery cell 10 to be measured.

The generated electrical signal may be transmitted to a protection circuit module (not illustrated) through the wire 32 and the connector 33 that are connected to one end of the temperature device 31. The transmitted signal may be used to monitor a temperature change of the battery cell 10 and control a charge/discharge operation of the battery cell 10. Based on the temperature information received from the temperature device 31, the protection circuit module may prevent overheating and explosion that may be caused by the overcharge, overdischarge, or overcurrent of the battery cells 10. To this end, the protection circuit module may include a protection device. The protection element may selectively include safety elements, including passive elements such as resistors and capacitors and active elements such as field-effect transistors, or integrated circuits.

The holder 20 includes a cooling hole 213 that extends in a direction identical to the extension direction (longitudinal direction, z direction) of the battery cell 10. As will be described later, the holder 20 is assembled to directly contact the battery cells 10 forming neighboring rows while being disposed between the neighboring rows. Heat may be generated when the battery cell 10 may repeat charging and discharging. When the generated heat is not dissipated, the battery cell 10 may be overheated and may not perform a normal operation. In order to prevent an abnormal operation of the battery cell 10 due to the overheating, the holder 20 may include the cooling holder 213 that is disposed between the adjacent rows.

The pair of end holders 41 and 42 are disposed at the outermost portion of the battery cells 10 that are arranged to form rows and columns. For example, the pair or end holders 41 and 42 may include a first end holder 41 that is disposed adjacent to an one edge row of the battery cells 10, and a second end holder 42 that is disposed adjacent to the other edge row of the battery cells 10 to face the first end holder 41.

One surface of the first end holder 41 may directly contact the first row R1. For example, one surface of the first end holder 41 may be disposed to directly contact and face the side surfaces of the battery cells 10 forming the first row R1.

One surface of the second end holder 42 may directly contact the m-th row Rm that is opposite to the first row R1. For example, one surface of the second end holder 42 may be disposed to directly contact and face the side surfaces of the battery cells 10 forming the m-th row Rm.

The first end holder 41 and the second end holder 42 may be mechanically coupled by coupling members 51 and 52 while disposing the first end holder 41 and the second end holder 42 at the outermost portion of the battery cells 10. After disposing the first and second end holes 41 and 42 at the outermost portion of the battery cells 10 having the holder 20 between the neighboring cells, by using the coupling members 51 and 52, the battery cells 10, the holder 20, and the first and second end holders 41 and 42 may be coupled in one united body.

The coupling members 51 and 52 include a bar-type bolt 51 that extends through the first and second end holders 41 and 42 and the holder 20, and a nut 52 that is coupled to one end of the bolt 51. The battery cells 10, the holder 20, and the first and second end holders 41 and 42 may be coupled in one united body by coupling the nut 52 and one end of the bolt 51 after inserting the bolt 51 into a through hole H formed at the holder 20 and the first and second holders 41 and 42 such that the bolt 51 passes through the holder 20 and the first and second holders 41 and 42.

The first and second bus bars 61 and 62 are disposed respectively at the positions corresponding to the top surface and the bottom surface of the battery cells 10, and may electrically couple the battery cells 10. For example, the battery cells 10 may be connected in parallel by welding the first bus bar 61 to the top surface of the battery cells 10 and welding the second bus bar 62 to the bottom surface of the battery cells 10.

The first bus bar 61 includes a hole 61 h that is formed at a position corresponding to the cooling hole 213 formed at the holder 20. As described above, the first bus bar 61 is welded on the top surface of the battery cells 10. Therefore, when the hole 61 h is not formed at the first bus bar 61, the cooling hole 213 may be blocked and thus the cooling of the battery cells 10 may be difficult.

The second bus bar 62 includes a hole 62h that is formed at a position corresponding to the cooling hole 213 formed at the holder 20. As described above, the second bus bar 62 is welded on the bottom surface of the battery cells 10. Therefore, when the hole 62h is not formed at the second bus bar 62, the cooling hole 213 may be blocked and thus the cooling of the battery cells 10 may be difficult.

Although the present embodiment illustrates a case where the battery cells 10 are connected in parallel, embodiments of the present invention are not limited thereto. In another embodiment of the present invention, the battery cells 10 may be connected in series, or in a series-parallel.

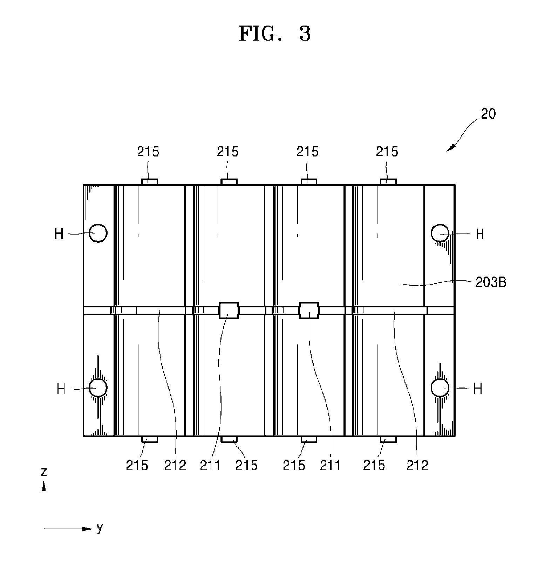

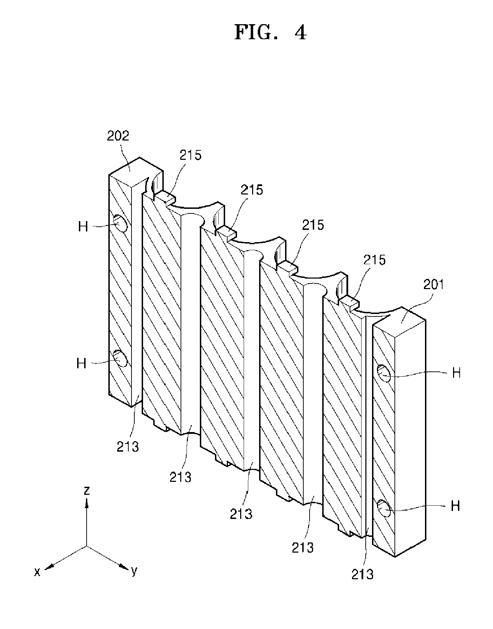

FIG. 2 is a detailed perspective view illustrating the holder 20 and the temperature unit 30 illustrated in FIG. 1. FIG. 3 is a front view of the holder 20 illustrated in FIG. 2. FIG. 4 is a perspective view taken along line IV-IV in FIG. 2.

Referring to FIGS. 2 to 4, the holder 20 includes first and second edge portions 201 and 202 that are formed at both sides of the holder, and a partition portion 203 that couples the first and second edge portions 201 and 202.

The first and second edge portions 201 and 202 are disposed at respective sides of the holder 20. As described above with reference to FIG. 1, the first and second edge portions 201 and 202 include the through hole H that extend in the x direction such that the coupling members 51 and 52, for example, the bolt 51 may pass therethrough.

The first and second edge portions 201 and 202 protrude (or extend) in the ±x directions. The first and second edge portions 201 and 202 protrude in the -x direction, which is a direction from the partition portion 203 toward the battery cells forming the first row, and the x direction, which is a direction from the partition portion 203 toward the battery cells forming the second row. For example, each of the ends of the first edge portion 201 and may protrude by the radius of the battery cell 10 in the x direction and the -x direction. Likewise, each of the ends of the second edge portion 202 and may protrude by the radius of the battery cell 10 in the x direction and the -x direction.

Since rows of the battery cells 10 are disposed in parallel to each other, the holders 20 disposed between the rows of battery cells 10 may also be disposed in parallel to each other as illustrated in FIG. 1. Referring to FIG. 1, the battery cells 10 forming one row may be disposed between the adjacent holders 20. As described above, since the ends of the first and second edge portions 201 and 202 protrude by the radius of the battery cell 10 in the x direction and the -x direction, the edge portions 201 and 202, for example, the ends of the first and second edge portions 201 and 202, of the neighboring holders 20 may contact each other. For example, the first edge portions 201 of the neighboring holders 20 may contact each other, and the second edge portions 202 of the neighboring holders 20 may contact each other.

The partition portion 203 extends in the y direction to couple the first and second edge portions 201 and 202. A first surface 203A of the partition portion 203 may contact the side surfaces of the battery cells 10 of the first row R1, and a second surface 203B of the partition portion 203, which is opposite to the first surface 203A, may contact the side surfaces of the battery cells 10 of the second row R2.

According to an embodiment of the present invention, if the battery cells 10 are cylindrical, the first and second surfaces 203A and 203B of the partition portion 203 may include a recess having a shape corresponding to the side surface of the battery cells 10. Since the recess corresponding to the side surface of the battery cells 10 is formed, the partition portion 203 may include a thick portion 203T that is relatively thick, and a thin portion 203t that is relatively thin.

The first receiving groove 211 configured to receive the temperature device 31 is formed on the first and second surfaces 203A and 203B of the holder 20, for example, on the first and second surfaces 203A and 203B of the partition portion 203. The first receiving groove 211 may be formed at a center region of at least one of the first and second surfaces 203A and 203B such that the temperature of a battery cell 10 disposed at inner side of a row may be measured. For example, when four (even-numbered) battery cells 10 form one row as in the present embodiment, the first receiving groove 211 may be formed at a position corresponding to the side surface of the inner second battery cell 10 or the third battery cell 10. In another embodiment, when five (odd-numbered) battery cells 10 form one row, the first receiving groove 211 may be formed at a position corresponding to the side surface of the center third battery cell 10.

The depth of the first receiving groove 211 may be smaller than or equal to the thickness of the temperature device 31 such that the temperature device 31 seated in the first receiving groove 211 may directly contact the side surface of the battery cell 10.

The wire 32 and the connector 33 are coupled to one end of the temperature device 31, and the connector 33 is exposed to the outside so that the connector 33 is connected to an external protection circuit module (not illustrated). At least one of the first and second surfaces 203A and 203B of the holder 20 may further include a second receiving groove 212 that is coupled to the first receiving groove 211 and configured to receive the wire 32.

Although FIGS. 2 and 3 illustrate a case where the first receiving groove 211 and the second receiving groove 212 coupled to the first receiving groove 211, are formed in two pairs, embodiments of the present invention are not limited thereto. As illustrated in FIGS. 2 and 3, when two pairs of first and second receiving grooves 211 and 212 are formed, the temperature unit 30 may be received in any one of the two pairs of first and second receiving grooves 211 and 212. In another embodiment, only one pair of first and second receiving grooves 211 and 212 may be provided.

The partition portion 203 may include a cooling hole 213 that extends in parallel to the longitudinal direction (z direction) of the battery cell 10. The cooling hole 213 has a structure for preventing the overheating of the battery cells 10, and may be formed in the longitudinal direction (z direction) of the battery cell 10. As described above, the first and second end holders 41 and 42, the holder 20, and the battery cells 10 are closely assembled by the coupling members 51 and 52. Therefore, when the heat generated in the battery cells 10 is not dissipated for a long period of time, the battery cells 10 may be deteriorated.

According to the present embodiment, in order to prevent the deterioration of the battery cells 10, the cooling hole 213 is formed at a position adjacent to the battery cells 10, for example, at the thick portion 203T of the partition portion 203. According to the present embodiment, since the cooling hole 213 is provided at the thick portion 203T formed according as both side surfaces (i.e., first and second surfaces 203A and 203B) of the partition portions 203 include a recess corresponding to the side surface of the battery cells 10, space utilization may be maximized. That is, there may be no need to increase the thickness of the holder 20 in order to form the cooling hole 213.

The top and bottom surfaces of the holder 20, for example, the top and bottom surfaces of the partition portion 203 include a stopper 215 that contact the top and bottom surfaces of the battery cell 10. As described above, since the battery cells 10 are disposed such that the side surface of the battery cells 10 contacts the holder 20, and are assembled by the coupling members 51 and 52, there is no possibility of the battery cells 10 being detached in the lateral direction. However, the battery cells 10 may be separated from the holder 20 in z direction. Therefore, the holder 20 includes the stopper 215 so that the battery cells 10 are not separated from the holder 20 in the direction of the top surface or bottom surface of the battery cell 10. Although it is illustrated that the stopper 215 is formed at the thin portion 203t of the partition portion 203, embodiments of the present invention are not limited thereto. The position of the stopper 215 is not limited as long as the stopper 215 may contact the top surface and bottom surface of the battery cells 10 to prevent the battery cells 10 from being detached from the holder 20.

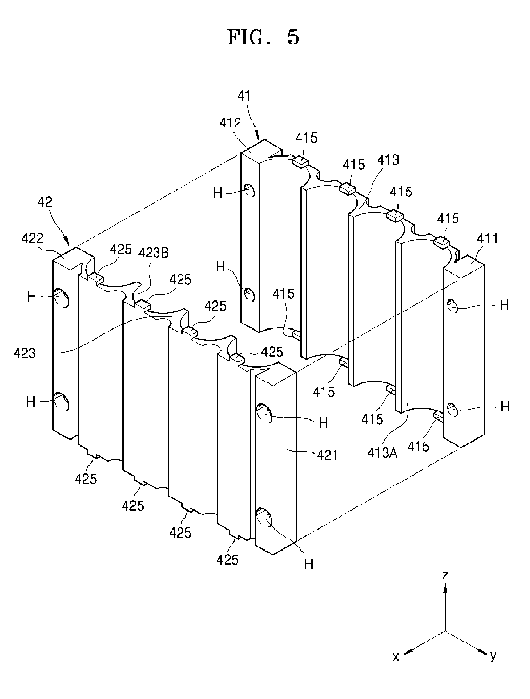

FIG. 5 is a detailed perspective view illustrating the first and second end holders 41 and 42 according to an embodiment of the present invention.

Referring to FIG. 5, the first and second end holders 41 and 42 may be disposed such that the surfaces contacting the side surface of the battery cells 10 face each other. When the battery cells 10 are cylindrical as in the present embodiment, one surface 413A of the first end holder 41 and one surface 423B of the second end holder 42 may include a recess having a shape corresponding to the side surface of the battery cells.

The first and second end holders 41 and 42 may respectively include first and second edges 411, 412, 421 and 422 and partition portions 413 and 423.

The first and second edge portions 411 and 412 of the first end holder 41 may be disposed at both sides of the first end holder 41 and may include a through hole H that extend in the x direction such that the coupling members 51 and 52, for example, the bolt 51 may pass therethrough, as described above.

The first and second edge portions 421 and 422 of the second end holder 42 are disposed at both sides of the second end holder 42 and include a through hole H that extends in the x direction such that the coupling members 51 and 52, for example, the bolt 51 may pass therethrough.

The first and second edge portions 411 and 412 of the first end holder 41 protrude in the x direction. For example, ends of the first and second edge portions 411 and 412 of the first end holder 41 may protrude by the radius of the battery cell 10 in the x direction.

The first and second edge portions 421 and 422 of the second end holder 42 protrude in the -x direction. For example, ends of the first and second edge portions 421 and 422 of the second end holder 42 may protrude by the radius of the battery cell 10 in the -x direction.

The partition portions 413 and 423 of the first and second end holders 41 and 42 extend in the y direction. As described above, one surface of the partition portions 413 and 423 include a recess having a shape corresponding to the side surface of the battery cells 10 such that the surface may directly contact the side surface of the battery cells 10.

The top and bottom surfaces of the first and second end holders 41 and 42, for example, the top and bottom surfaces of the partition portions 413 and 423 include a stopper 215 that contact the top and bottom surfaces of the battery cell 10. As described above, since the battery cells 10 are disposed such that the side surface of the battery cells 10 contacts the first and second end holders 41 and 42, and are assembled by the coupling members 51 and 52, there is no possibility of the battery cells 10 being detached in the lateral direction. However, the battery cells 10 may be separated from the first and second end holders 41 and 42 in z direction. Therefore, the first and second end holders 41 and 42 include stoppers 415 and 425 so that the battery cells 10 are not separated from the first and second end holders 41 and 42 in the direction of the top surface or bottom surface of the battery cell 10.

As described above, according to the embodiments of the present invention, since the battery pack is assembled with the holder 20 interposed between the row of battery cells 10 and the holder 20 includes the first receiving groove 211 configured to receiving the temperature device 31 and the cooling hole 213 configured to prevent the overheating of the battery cell 10, the battery pack may easily control the temperature of the battery cells 10 while receiving the battery cells 10.

As described above, according to the one or more of the above embodiments of the present invention, the battery packs may easily control the temperature of the battery cells while receiving the battery cells.

It should be understood that the embodiments described herein should be considered in a descriptive sense only and not for purposes of limitation. Descriptions of features or aspects within each embodiment should typically be considered as available for other similar features or aspects in other embodiments.

While one or more embodiments of the present invention have been described with reference to the figures, it will be understood by those of ordinary skill in the art that various changes in form and details may be made therein without departing from the scope of the present invention as defined by the following claims.

## Claims

1. A battery pack comprising:
a plurality of battery cells arranged in a plurality of rows;
a holder situated between mutually adjacent first and second rows of the battery cells, the said holder having a first surface contacting a side surface of the first row of battery cells and a second surface contacting a side surface of the second row of battery cells; and
a temperature device that is configured to measure a temperature of the battery cells,
wherein at least one of the said first and second surfaces includes a first receiving groove that accommodates the temperature device.

2. A battery pack according to claim 1, wherein the depth of the first receiving groove is smaller than or equal to the thickness of the temperature device.

3. A battery pack according to claim 1 or 2, wherein the temperature device is connected to a wire that extends toward the outside of the battery pack, and
the holder further comprises a second receiving groove that is coupled to the first receiving groove and receives the wire.

4. A battery pack according to claim 1, wherein the temperature device contacts a side surface of an inner battery cell among the battery cells forming the first row or the second row.

5. A battery pack according to any preceding claim, wherein a cooling hole extends through the holder.

6. A battery pack according to any preceding claim, wherein the first surface and the second surface of the holder each comprise a plurality of recesses corresponding in shape to the side surface of the battery cells.

7. A battery pack according to any preceding claim, wherein
a first end holder is disposed at a first outermost portion of the battery cells,
a second end holder is disposed at a second outermost portion of the battery cells and
the end holders and the holder are coupled by a coupling member that passes through the pair or end holders and the holder.

8. A battery pack according to any preceding claim, wherein the holder further comprises a plurality of stoppers, each of which contacts at least a top surface or a bottom surface of a said battery cell.

9. A battery pack according to claim 5 or any claim dependent upon claim 5, further comprising a bus bar that electrically connects the battery cells and comprises a hole formed at a position corresponding to the cooling hole.

10. A battery pack according to any preceding claim, wherein the holder comprises:
a first edge portion and a second edge portion that are respectively disposed at opposite sides of the holder; and
a partition portion that couples the first edge portion and the second edge portion, and comprises the first receiving groove.

11. A battery pack according to claim 10, wherein each of the first and second edge portions protrudes along a direction from the partition portion toward the battery cells forming the first row and a direction from the partition portion toward the battery cells forming the second row.

12. A battery pack according to claim 11, wherein each of ends of the first and second edge portions protrudes by a length of a radius of the battery cell.

13. A battery pack according to claim 10, 11 or 12, wherein
the partition portion comprises a relatively thick portion and a relatively thin portion, the said relatively thick portion projecting between two of the battery cells..

14. A battery pack according to claim 13, wherein a cooling hole is formed at the thick portion.
